# EUROPEAN PATENT APPLICATION

(11) **EP 1 640 878 A1**
(43) Date of publication of application: **29.03.2006**
(21) Application number: 04104637.6
(22) Date of filing: 23.09.2004
(51) Int. Cl.: G06F 17/30

(54) **Web browser graphical user interface and method for implementing same**

(71) Applicant: Research In Motion Limited, Waterloo, Ontario N2L 3W8 (CA)
(72) Inventor: Tapuska, David Francis, N2T 2T7, Waterloo (CA); Knowles, Michael, N2T 2X5, Waterloo (CA); Lazaridis, Mihal, N2T 2K1, Waterloo (CA); Yach, David P., N2K 2N1, Waterloo (CA)
(74) Representative: Rickard, David John

(57) **Abstract**

An improved graphical user interface for browsing web pages on small screens is provided. The user interface first displays a reduced representation of the web page on the screen. Upon selection of a portion of interest within the web page, the user interface displays the selected portion in a larger size, optionally in a verticalized representation. Optionally, both representations can be displayed simultaneously. A method of implementing this web browser is also provided whereby initially, only data sufficient to display the reduced representation of the web page is downloaded. Upon the user selecting a portion of interest within the web page, data required to display the selected portion in the larger size is downloaded and displayed.

## Description

This application relates to the field of computer user interfaces, and in particular to graphical user interfaces used to browse documents, and methods for implementing such interfaces.

### BACKGROUND

Graphical user interfaces used to browse documents such as web pages are well known. In typical document browser interfaces, a portion of the document is displayed on a screen, and other portions of the document are viewed by scrolling the document up and down across the screen using keystrokes, mouse inputs, or other user inputs.

This method of browsing a document works well for most applications. However, inadequacies become apparent when the document is particularly long. In such cases, it may be necessary to scroll through the document for a considerable period of time before the portion of interest can be viewed. One effort to solve this problem is the use of a "page up" and "page down" feature to allow the user to scroll quickly. Another is the use of a vertical scroll bar allowing the user to select a relative location of the document to be viewed on the screen. However, such solutions do not allow the user to easily identify within the document, the portion of interest to jump to.

A further effort to solve this problem is the display of selectable thumbnail images of pages of the document on a side panel, or to allow the user to jump to a particular page number. These methods can be effective but can only be implemented when the document is conveniently split up into pages. Of course many documents such as web pages are continuous, are not split up into such pages, and as such cannot be displayed and navigated using such methods.

The inadequacies identified above are particularly acute when the screen is small, as is the case when the document is being viewed on, for example, a personal digital assistant (PDA), a wireless handheld device, or a web-enabled cell phone.

Many documents, and most web pages in particular, are designed for, and are best viewed on a wide screen, typically one having a horizontal resolution of 800 or 1024 pixels. In many cases, web page authors take advantage of these large screen sizes by giving web pages a two-dimensional structure. This two-dimensional structure lays out the web page as a collection of adjacent areas (often rectangular areas, but not necessarily so). These areas contain different types of semantic information, such as a set of links to other areas of the website, a story, an image, advertisements, etc. Very often, these different areas have distinct visual features that allow a user to quickly identify an area of interest with a simple glance at the page. Users often use those distinct, large-scale visual features to quickly identify the specific area of the page they are interested in. This, in turn, allows them to quickly focus their attention on that area and read the text, view the image, click a desired link, or otherwise interact with the desired area of the page.

The screens on handheld devices are typically much smaller than the screen resolution for which many documents, and especially web pages are authored. Because of this restriction, in order to display the content of web pages, browsers on handheld devices often break apart such web pages and re-render them as a much narrower "ribbon" of content that the user can scroll through vertically to view the entire page. While this "verticalized" re-rendering of the web page retains all of the content of the original web page, much of the two-dimensional structure of the original page is lost.

This verticalization process has several effects. First, the absence of large-scale, two-dimensional landmarks in the verticalized re-renderings makes it much harder for the user to identify the various different semantically distinct areas of content on the verticalized page. Second, the height of the web page in the verticalized re-rendering is many times greater than the original height. The user of the handheld device must perform many more scroll-down operations (e.g., using a trackwheel or some other key or input mechanism to scroll one line or one screenful at a time) in order to navigate through the entire page. Not only is this process tedious, but the very act of having to scroll many times distracts the user as he focuses on the content as it scrolls by, making it even harder for the user to find the desired area of interest. Third, in many pages, the highest value content (e.g., the text of the main story in a news page) ends up being rendered many screenfuls down the verticalized page, forcing the user to perform a large number of scroll operations before the portion of interest can be viewed.

A further problem with the typical method of browsing documents arises where the document needs to be downloaded for viewing, and the document is particularly long or the downloading bandwidth is limited. Because typical document browsing methods require the entire document to be downloaded before the document can be browsed, it may take some time after the document is requested before it can be viewed and browsed by the user.

### SUMMARY

In a broad aspect, the application provides a method for a web browser to interact with a user, the method comprising: (a) displaying a first representation of a web page in a reduced size; (b) receiving a first input from the user to zoom into a portion of interest within the web page, the portion of interest being selected by the user in the first representation; and (c) displaying a second representation of the selected portion of the web page in a larger size.

The first and second representations may be displayed alternately or simultaneously. In the case where the first and second representations are displayed alternately, the method further contemplates receiving a second input from the user to zoom out, and in response to receiving the second input, replacing the second representation with the first representation. In the case where the first and second representations are displayed simultaneously, the method further contemplates displaying in the first representation, indicia identifying the portion of the web page to be displayed in the second representation, and the portion of interest within the web page is selected by the user moving the said indicia within the first representation, and optionally selecting this portion.

Prior to displaying the first representation, the method also contemplates downloading the web page, and rendering the first representation of the web page in a reduced size. Alternately, a rendering of the first representation of the web page in a reduced size may be downloaded prior to displaying the first representation, and a rendering of the second representation of the selected portion of the web page in a larger size may be downloaded between steps (b) and (c).

The method may be practised on a handheld device and the second representation may be a verticalized representation.

In another aspect, the application provides a computer system for displaying a web page, the computer system comprising: a processor; an input device connected to the processor for communicating user inputs to the processor; a screen connected to the processor for displaying the web page; and web page display means associated with the processor operable to cause said processor to: (a) display on the screen, a first representation of the web page in a reduced size; (b) receive from the input device, a first input to zoom into a portion of interest within the web page, the portion of interest being selected in the first representation; and (c) display on the screen, a second representation of the selected portion of the web page in a larger size.

As with the method described above, the web page display means may be operable to cause the processor to display the first and second representations on the screen alternately, or simultaneously. Where the first and second representations are displayed alternately, the display means may also cause the processor to receive a second input from the input device to zoom out, and in response to receiving said second input, to replace the second representation on the screen with the first representation.

The computer system may also comprise a communication device connected to the processor to allow the processor to communicate with another computer. In such a case, the display means may cause the processor to download the web page from said another computer through said communication device, and render the first representation of the web page in a reduced size, both prior to step (a). Alternatively, the display means may cause the processor to download from the other computer through the communication device, a rendering of the first representation of the web page in a reduced size before step (a), and download from the other computer through the communication device a rendering of the second representation of the selected portion of the web page in a larger size between steps (b) and (c).

The computer system may be a handheld device.

In a still further aspect, the application provides a method for a server to communicate a web page to a client, the method comprising: rendering a first representation of the web page in a reduced size; transmitting the rendering of the first representation to the client; receiving a request from the client for a rendering of a second representation of a selected portion of the web page in a larger size; and in response to receiving the request, rendering the second representation of the selected portion of the web page in the larger size and transmitting the rendering of said second representation to the client. This method may be practised on a wireless telecommunications server where the client is a wireless handheld device.

The application also contemplates computer-readable media containing instructions for a computer to implement any of the above methods.

Other aspects and features will become apparent, to those ordinarily skilled in the art, upon review of the following description of the specific embodiments.

### BRIEF DESCRIPTION OF THE DRAWINGS

Preferred embodiments will now be described with reference to the attached drawings in which:
Figure 1 is a screen shot of a prior art web browser displaying a web page on a desktop screen;
Figure 2 is a screen shot of a prior art web browser displaying the same web page on a screen of a handheld device;
Figure 3 is a sample screen shot of a web browser in accordance with one embodiment of the user interface of this application, displaying a reduced representation of the web page;
Figure 4 is a sample screen shot of the web browser of Figure 3 displaying a verticalized representation of the web page;
Figure 5 is a sample screen shot of a web browser in accordance with another embodiment of the user interface of this application, displaying the web page;
Figure 6 is a block diagram of an exemplary network used to implement the user interface of Figures 3 through 5;
Figure 7 is a flow chart illustrating two methods of implementing the user interface embodiment of Figures 3 and 4; and
Figure 8 is a flow chart illustrating two methods of implementing the user interface embodiment of Figure 5.

### DETAILED DESCRIPTION OF THE PREFERRED EMBODIMENTS

The preferred embodiments are described and illustrated in the context of the display and browsing of a web page on a wireless handheld device. As will be understood by persons skilled in the art, the preferred embodiments and the subject of this application can be practiced in other contexts without necessarily departing from the scope of this application.

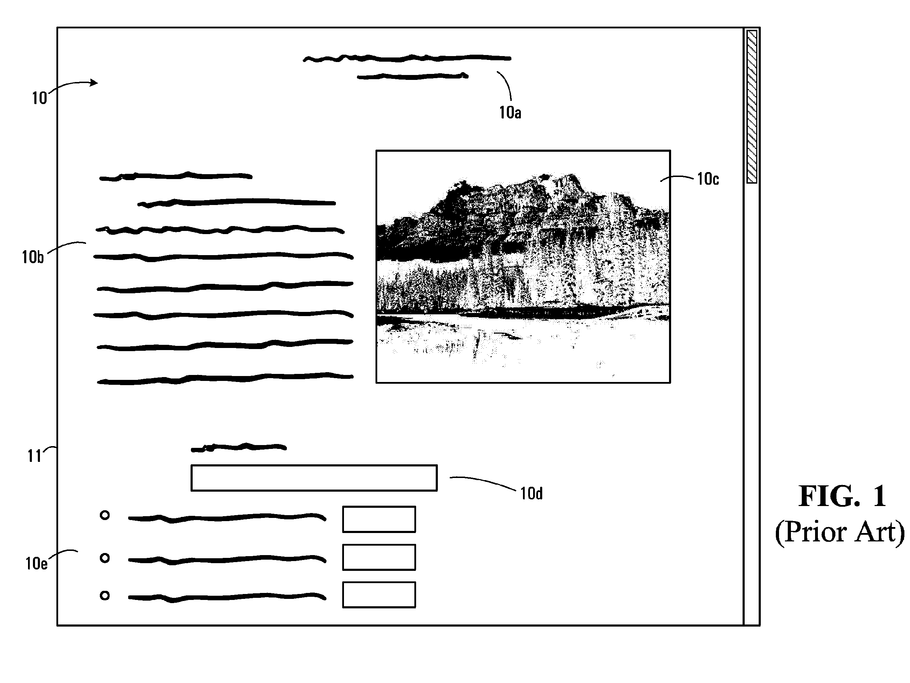

Figure 1 illustrates a typical web browser, for browsing a web page 10 on a desktop screen 11. The web page 10 is displayed in its full intended width on the screen 11, and contains a number of visually distinct features such as a title 10a, a caption 10b, a picture 10c, a search box 10d and a bulleted list 10e. As shown in Figure 1, upon opening the web page 10 using the browser, a first portion of the web page is displayed on the screen 12. In response to user scrolling inputs, the user interface displays other portions of the web page 10, thereby allowing the user to scroll the web page up and down across the screen 12.

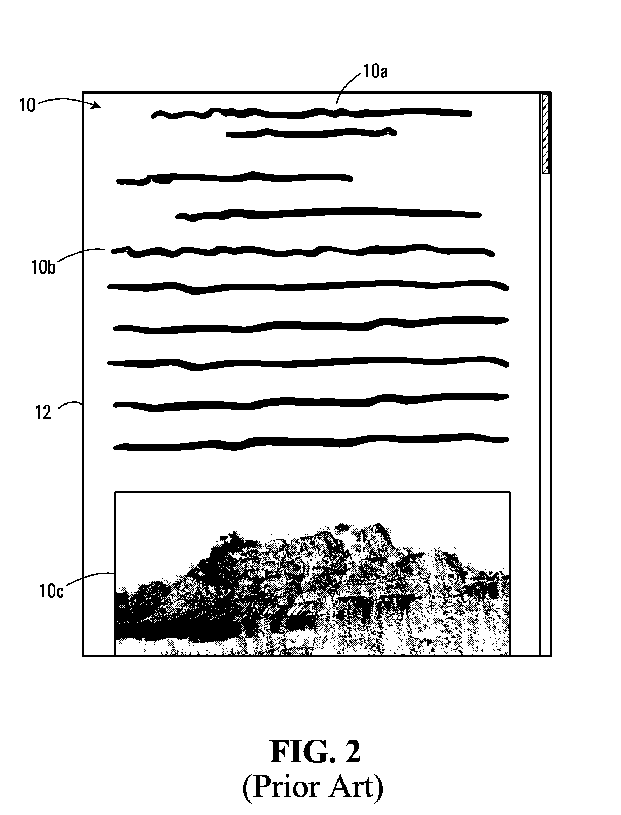

Figure 2 illustrates a typical user interface or browser for browsing a web page 10 on the screen 12 of a handheld device (not shown). Because the horizontal resolution of a handheld device screen 12 is typically much smaller than the horizontal resolution for which most web pages have been created, the web page 10 is rendered, for example by a wireless server or the handheld device itself, such that the web page 10 may be displayed in a narrower or "verticalized" representation. Thus, while the visually distinct features of the web page 10 were originally formatted in two dimensions so as to take advantage of the full width of a desktop screen, the web page has now been rendered to display each feature on a narrower screen in a substantially linear rendering. The caption 10b thus appears in Figure 2 directly below the title 10a, and the picture 10c appears directly below the caption 10b.

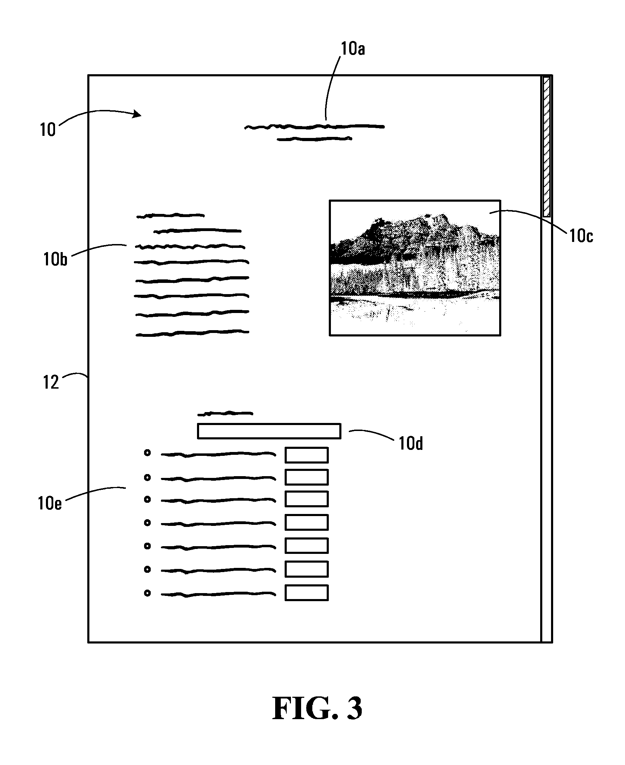

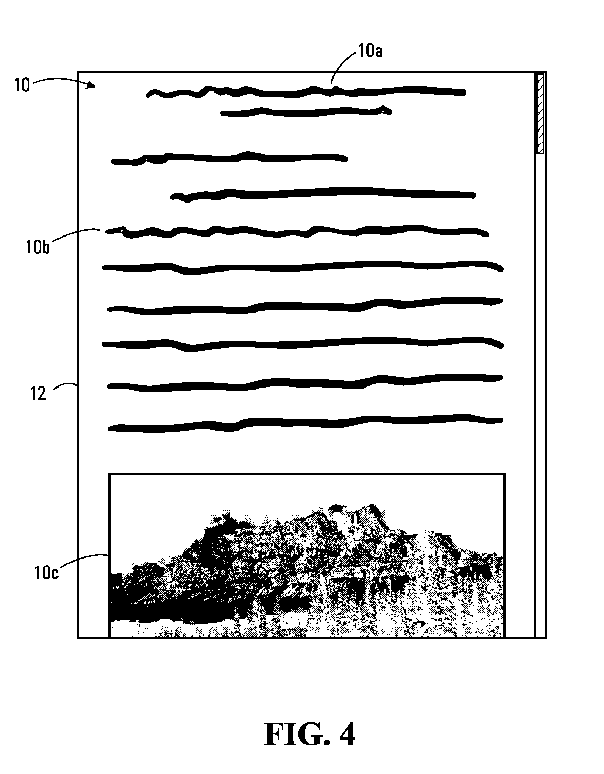

An improved user interface for browsing a web page on a handheld device is illustrated in Figures 3 and 4. In Figure 3, upon the user selecting a web page to download, the screen 12 of the handheld device first displays the web page in its original intended appearance (with the visually distinct features placed in their original two-dimensional orientations), but reduced to a smaller size to fit the width of the screen 12 of the handheld device. Due to its reduced size, this representation lacks details of the original web page 10, but does show the large-scale, two-dimensional features of the different areas of the page, allowing the user to readily identify the portion of interest within the web page 10. The web page 10 can be scrolled on the screen 12 using known means.

Once the user has identified the portion of interest within the web page 10, he selects that portion and selects to zoom into that area. The user can select the portion of interest by using any of a number of known means, for example manipulation in horizontal and/or vertical directions of an outline box superimposed on the reduced representation. Upon selection, a different representation of the web page 10 is displayed on the screen 12 of the handheld device, as shown in Figure 4. Figure 4 displays the web page 10 in a verticalized representation as discussed above in respect of Figure 2, in a larger size than the reduced representation. This verticalized representation of the selected portion allows the user to read text and to otherwise peruse the content of interest within the web page 10. In this example, the user had selected to zoom into the top portion of the web page 10 and as such the verticalized representation of the web site 10 commences at this selected point. The web page 10 can be scrolled on the screen 12 using known means.

At this stage, the user can navigate the web page 10, click on links to other pages, enter text into text boxes, and otherwise interact with the web page. Navigation of the web page 10 can take place through conventional means (for example by scrolling, or by selecting intra-page links), or by selecting to zoom back out to the reduced representation illustrated in Figure 3 such that he can navigate the web page 10 more quickly to locate another portion of interest. If the user selects to zoom out to the reduced representation, the web page 10 is displayed on the screen 12 in the reduced representation starting at the last location appearing on the screen in the verticalized representation. In this manner, the user can switch back and forth between the reduced representation and the verticalized representation in order to quickly "hop" between portions of interest within the web page 10. In the absence of such a reduced representation feature, the user may be required to perform many scrolling operations to navigate between portions of interest.

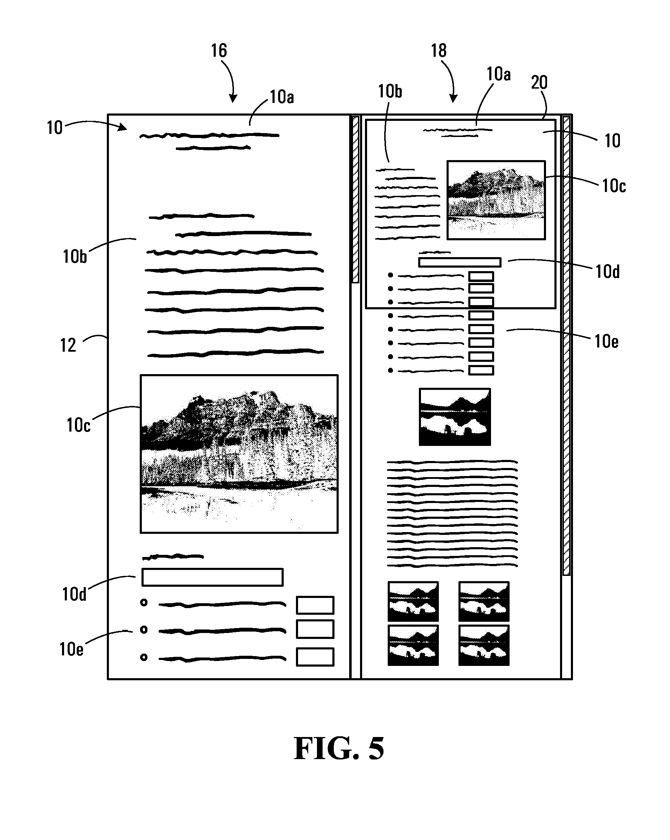

Optionally, instead of having the web page 10 appear on the screen 12 in one of the reduced representation (as illustrated in Figure 3) or the verticalized representation (as illustrated in Figure 4), the user may select to have both representations appearing on the screen simultaneously, as shown in Figure 5. In this view, the screen 12 is split into a first panel 16 and a second panel 18. The web page 10 is displayed in the first panel 16 in the verticalized representation while the web page 10 appears in the second panel 18 in the reduced representation. The web page 10 is scrollable in either panel. Optionally, instead of the second panel 18 displaying the web page 10 in a reduced representation of the web page as it was originally designed, the second panel may display the web page 10 in a scaled down representation of the verticalized web page appearing in the first panel 16.

The reduced representation of the web page 10 in the second panel 18 allows the user to see an overview of the web page 10, thereby facilitating the identification and selection of a portion of interest to be displayed in the first panel 16.

In this embodiment, the portion of the web page 10 displayed in the first panel 16 is identified in the second panel 18 by a selection box 20. In the illustrated example, the full width of the web page 10 is displayed in the first panel 16 and as such the selection box 20 extends the width of the web page 10 in the second panel 18. In the second panel 18, the selection box 20 can be moved horizontally or vertically in the web page 10 by any of a number of known means.

Once the selection box 20 has been moved to a new location within the web page 10 and that location is selected, the first panel 16 is updated to display the portion of the web page 10 identified by the selection box 20.

In the exemplary embodiment, the relative sizes of the first and second panels 16, 18 can be changed by the user.

Two exemplary methods of implementing the user interface illustrated in Figures 3 and 4 will now be described in the context of an Internet web page being downloaded, displayed and browsed on the handheld device.

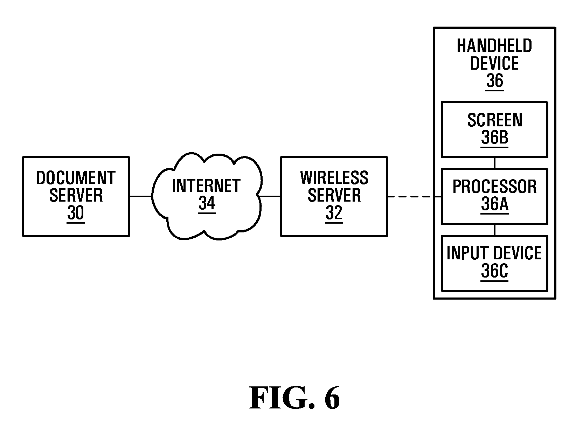

Figure 6 illustrates an exemplary network consisting of a document server 30 and a wireless server 32 both connected to the Internet 34. The wireless server 32 is connected wirelessly to a processor 36a of the handheld device 36 through a communication device (not shown) which is either integral with, or connected to the processor 36a. The processor 36a is in turn connected to a screen 36b and an input device 36c of the handheld device. The processor 36a has associated therewith, display means for directing the processor to implement the exemplary methods. Such display means may include computer software instructions for directing the processor.

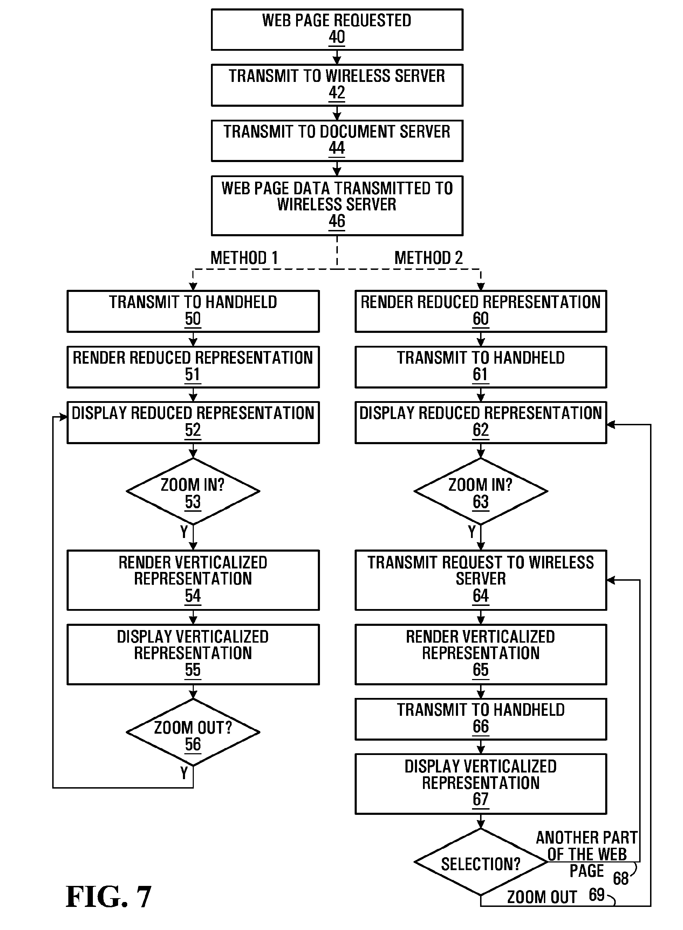

As shown in Figure 7, in both exemplary methods of implementing the preferred embodiment user interface, the user first requests 40 a web page to be downloaded, using the handheld device 36. This request is transmitted 42 wirelessly to the wireless server 32 which in turn relays 44 the request through the Internet 34 to the document server 30 having stored thereon, data for the requested web page. Upon receiving this request, the document server 30 transmits 46 the relevant web page data through the Internet 34 to the wireless server 32.

At this point, the two exemplary methods of implementing the user interface illustrated in Figures 3 and 4 diverge.

In the first method, the entirety of the web page data received by the wireless server 32 is transmitted 50 to the handheld device 36, whereupon the handheld device renders 51 a reduced representation of the web page. This reduced representation is then displayed 52 and managed on the screen 36b of the handheld device 36. If the user selects 53 within the reduced representation a point of the web page to zoom into, the handheld device 36 then renders 54 a verticalized representation of the web page commencing at the point selected, and this verticalized representation is displayed 55 and managed on the screen 36b. If the user then selects 56 to zoom out from the verticalized representation, the reduced representation is displayed 52, typically commencing at the point corresponding to the portion of the web page last displayed in the verticalized representation at the time the user selected to zoom out.

In the second method, the wireless server 32 renders 60 the reduced representation of the web page and this reduced representation is transmitted 61 to the handheld device 36. Upon receiving the reduced representation of the web page, the handheld device 36 displays 62 and manages this reduced representation. If the user selects 63 within the reduced representation a point of the web page to zoom into, a request is transmitted 64 to the wireless server 32, and the wireless server renders a verticalized representation of the web page commencing at the point selected, and this verticalized representation is transmitted 66 to the handheld device 36 along with any other associated content that is required to provide the appropriate functional and representational context in order to properly display and manage the selected portion of the web page. The handheld device 36 then displays 67 and manages the verticalized representation of the web page. If the user selects 68 to move to another portion of the web page (e.g., by scrolling up or down, or selecting an intra-page link), a verticalized representation of which has not yet been downloaded to the handheld device 36, the handheld device transmits an appropriate request to the wireless server 64. If instead the user then selects 69 to zoom out from the verticalized representation, the reduced representation is displayed 62, typically commencing at the point corresponding to the portion of the web page last displayed in the verticalized representation at the time the user selected to zoom out.

In this second method, because the size of the data associated with the reduced representation is much smaller than the size of the entire web page data, and because only data for verticalized representations of portions of interest within the web page are ever downloaded, the volume of data which must be transmitted from the wireless server 32 to the handheld device 36 to display the web page is typically less than, and can be considerably less than, if the entirety of the web page data was transmitted to the handheld device 36. Thus, the time lag between when the user requests the web page and when the web page appears on the handheld device can be reduced. Further, in the case where the user of the handheld device is charged by the volume of data downloaded, this method allows web pages to be viewed cost-effectively.

Two exemplary methods of implementing the user interface illustrated in Figure 5 will now be described in the context of an Internet web page being downloaded, displayed and browsed on the handheld device.

The first steps common to both methods are identical to those illustrated in Figure 7 as steps 40 through 46.

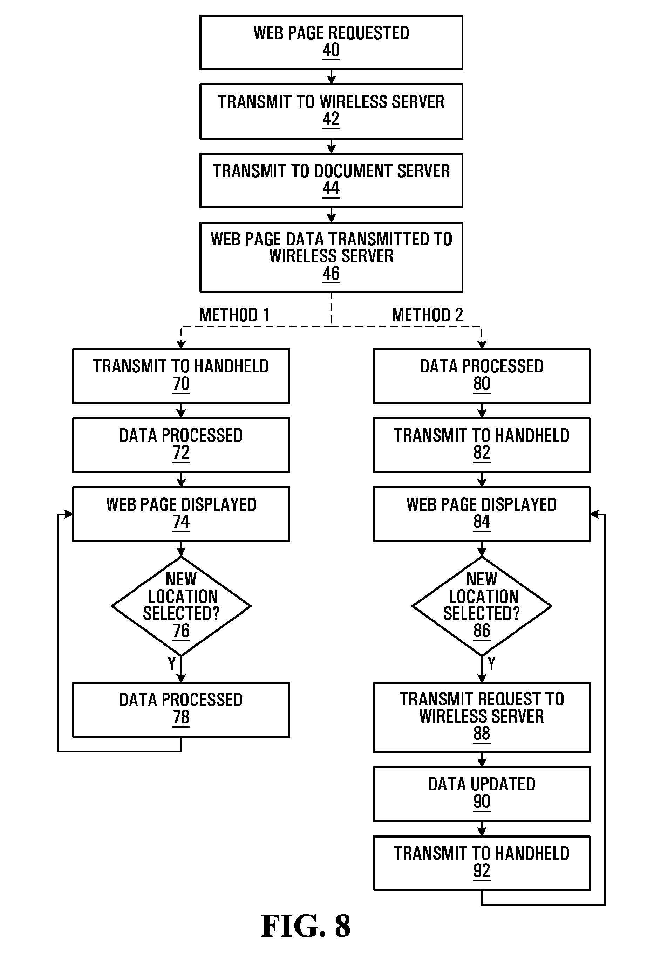

As seen in Figure 8, at this point, the two exemplary methods of implementing the user interface illustrated in Figure 5 diverge.

In the first method, the entirety of the web page data received by the wireless server 32 is transmitted 70 to the handheld device 36, whereupon the handheld device processes 72 the web page data to generate first panel data and second panel data. The first panel data contains information for displaying a portion of the web page in a verticalized representation in the first panel 16. The second panel data contains information for displaying the web page in a reduced representation in the second panel 18.

The handheld device 36 then displays and manages 74 the first panel data in the first panel 16, and the second panel data in the second panel 18. As the selection box 20 is moved to a new location within the second panel 18 and that location is selected 76 by the user, the handheld device generates 78 updated first panel data corresponding to the selected portion of the web page 10, and displays 74 the updated first panel data in the first panel 16.

In the second method, the wireless server 32 processes 80 the web page data to generate first panel data and second panel data. The first panel data and the second panel data are then transmitted 82 to the handheld device 36.

Upon receiving the first panel data and the second panel data, the handheld device 36 displays and manages 84 the first panel data in the first panel 16, and the second panel data in the second panel 18. As the selection box 20 is moved within the second panel 18 to a new location and that location is selected 86 by the user, the handheld device transmits 88 a request to the wireless server 32 for first panel data for the selected portion of the web page 10. The wireless server 32 generates 90 updated first panel data and transmits 92 this data to the handheld device 36 which displays and manages 64 the updated first panel data in the first panel 16.

As with the second method of implementing the user interface illustrated in Figures 3 and 4, in this second method, because the size of the second panel data is much smaller than the size of the entire web page data, and because only first panel data for portions of interest within the web page are ever downloaded, the volume of data which must be transmitted from the wireless server 32 to the handheld device 36 to display the web page is typically less than, and can be considerably less than, if the entirety of the web page data was transmitted to the handheld device 36. Thus, the time lag between when the user requests the web page and when the web page appears on the handheld device can be reduced. Further, in the case where the user of the handheld device is charged by the volume of data downloaded, this method allows web pages to be viewed cost-effectively.

The preferred embodiment user interfaces and methods for implementing same have been described in detail above. However, it is to be understood that variations to the interfaces and methods may be introduced without necessarily departing from the subject of this application. By way of example:
- although the user interfaces and methods have been described in the context of a wireless handheld device downloading and displaying the Internet web page, it is to be understood that the user interfaces and methods may be implemented in other contexts, display on a desktop computer, or on a cell phone, for example;
- while the user inputs to the handheld device have been described as being through a scroll wheel, it is to be understood that other user inputs may be used, mouse inputs, keyboard strokes, or stylus taps for example;
- in the figures an exemplary web page 10 is displayed for illustrative purposes only - of course other web pages, and indeed other documents may be displayed and browsed;
- although the first panel 16 and the second panel 18 have been described as being oriented side by side, other orientations are of course possible, the panels being displayed one above the other, or with the navigation panel being a movable window, for example;
- the first panel 16 is described as being updated only upon selection of a location in the web page 10 using the selection box 20 in the second panel 18 - however the image in the first panel 16 may be updated in response to other selection cues, for example the first panel 16 may be updated continuously as the selection box 20 is moved within the second panel 18, or the first panel 16 may be updated upon detecting a pause in scrolling of the selection box 20 by the user; and
- it is to be understood that in cases where a large-scale feature of the web page (such as a large image) is a selectable link, the user may identify that large-scale feature within the reduced representation and then choose to follow the link associated with that large-scale feature. In other words, the user has the ability to navigate from page to page, or even within pages, using only the reduced representation, where such features exist on the web page.

Numerous modifications and variations of the subject of this application are possible in light of the above teachings. It is therefore to be understood that within the scope of the appended claims, the subject of this application may be practiced otherwise than as specifically described herein.

## Claims

1. A method for a web browser to interact with a user, the method comprising:
(a) displaying a first representation of a web page in a reduced size;
(b) receiving a first input from the user to zoom into a portion of interest within the web page, said portion of interest being selected by the user in the first representation; and
(c) displaying a second representation of the selected portion of the web page in a larger size.

2. The method of claim 1 wherein upon receiving the first input, the second representation replaces the first representation.

3. The method of claim 2 further comprising:
receiving a second input from the user to zoom out; and
in response to receiving said second input, replacing the second representation with the first representation.

4. The method of claim 1 wherein the first and second representations are displayed simultaneously in first and second panels.

5. The method of claim 4 further comprising:
displaying in the first representation, indicia identifying the portion of the web page to be displayed in the second representation;
and wherein the portion of interest within the web page is selected by the user moving the said indicia within the first representation.

6. The method of claim 4 further comprising:
displaying in the first representation, indicia identifying the portion of the web page to be displayed in the second representation;
and wherein the portion of interest within the web page is selected by moving the said indicia within the first representation to the portion of interest and selecting said portion.

7. The method of any one of claims 1 to 6 further comprising:
downloading the web page; and
rendering the first representation of the web page in a reduced size, both prior to step (a).

8. The method of any one of claims 1 to 6 further comprising:
downloading a rendering of the first representation of the web page in a reduced size before step (a); and
downloading a rendering of the second representation of the selected portion of the web page in a larger size between steps (b) and (c).

9. The method of any one of claims 1 to 8 wherein the web browser is operated on a handheld device and the second representation is a verticalized representation.

10. A computer-readable medium containing instructions for a computer to implement the method of any one of claims 1 to 9.

11. A computer system for displaying a web page, said computer system comprising:
a processor;
an input device connected to said processor for communicating user inputs to the processor;
a screen connected to said processor for displaying the web page; and
web page display means associated with said processor operable to cause said processor to:
(a) display on the screen, a first representation of the web page in a reduced size;
(b) receive from the input device, a first input to zoom into a portion of interest within the web page, said portion of interest being selected in the first representation; and
(c) display on the screen, a second representation of the selected portion of the web page in a larger size.

12. The computer system of claim 11 wherein the web page display means is further operable to cause said processor to replace the first representation on the screen with the second representation upon receipt of the first input.

13. The computer system of claim 12 wherein the web page display means is further operable to cause said processor to:
receive a second input from the input device to zoom out; and
in response to receiving said second input, replace the second representation on the screen with the first representation.

14. The computer system of claim 11 wherein the web page display means is further operable to cause said processor to display on the screen, the first and second representations simultaneously in first and second panels.

15. The computer system of any one of claims 11 to 14 further comprising:
a communication device connected to said processor to allow the processor to communicate with another computer,
wherein said web page display means is further operable to cause said processor to:
download the web page from said another computer through said communication device; and
render the first representation of the web page in a reduced size, both prior to step (a).

16. The computer system of any one of claims 11 to 14 further comprising:
a communication device connected to said processor to allow the processor to communicate with another computer,
wherein said web page display means is further operable to cause said processor to:
download from said another computer through said communication device, a rendering of the first representation of the web page in a reduced size before step (a); and
download from said another computer through said communication device, a rendering of the second representation of the selected portion of the web page in a larger size between steps (b) and (c).

17. The computer system of any one of claims 11 to 16 wherein the computer system is a handheld device.

18. A method for a server to communicate a web page to a client, said method comprising:
rendering a first representation of the web page in a reduced size;
transmitting said rendering of the first representation to the client;
receiving a request from the client for a rendering of a second representation of a selected portion of the web page in a larger size; and
in response to receiving said request, rendering the second representation of the selected portion of the web page in the larger size and transmitting said rendering of said second representation to the client.

19. The method of claim 18 wherein the server is a wireless telecommunications server and the client is a wireless handheld device.

20. A computer-readable medium containing instructions for a server to implement the method of either one of claims 18 and 19.

## Amended claims

### Amended claims in accordance with Rule 86(2) EPC.

**1.** A method for a web browser to interact with a user, the method comprising:
(a) displaying a first representation (18) of a web page (10) in its original layout in which a collection of adjacent areas of content (10a, 10b, 10c, 10d) are rendered in a two-dimensional structure, but in a reduced size;
(b) receiving a first input from the user to zoom into a portion of interest (20) within the web page (10), said portion of interest being selected by the user in the first representation (18); and
(c) displaying a second representation (16) of the selected portion of the web page (10) in another layout wherein the areas of content (10a, 10b, 10c, 10d) are re-rendered in a narrower structure, and in a larger size.

**2.** The method of claim 1 wherein upon receiving the first input, the second representation (16) replaces the first representation (18).

**3.** The method of claim 2 further comprising:
receiving a second input from the user to zoom out; and
in response to receiving said second input, replacing the second representation with the first representation.

**4.** The method of claim 1 wherein the first and second representations are displayed simultaneously in first and second panels (16, 18).

**5.** The method of claim 4 further comprising:
displaying in the first representation, indicia (20) identifying the portion of the web page to be displayed in the second representation;
and wherein the portion of interest within the web page (10) is selected by the user moving the said indicia within the first representation (18).

**6.** The method of claim 4 further comprising:
displaying in the first representation, indicia (20) identifying the portion of the web page (10) to be displayed in the second representation (18);
and wherein the portion of interest within the web page (10) is selected by moving the said indicia (20) within the first representation (18) to the portion of interest and selecting said portion.

**7.** The method of any one of claims 1 to 6 further comprising:
downloading the web page (10); and
rendering the first representation (18) of the web page (10) in its original layout, but in a reduced size,
both prior to step (a).

**8.** The method of any one of claims 1 to 6 further comprising:
downloading a rendering of the first representation (18) of the web page (10) in a reduced size before step (a); and
downloading a rendering of the second representation (16) of the selected portion of the web page (10) in the other layout, and in a larger size between steps (b) and (c).

**9.** The method of any one of claims 1 to 8 wherein the other layout (16) comprises a substantially linear rendering of the areas of content (10a, 10b, 10c, 10d).

**10.** A computer-readable medium containing instructions for a computer to implement the method of any one of claims 1 to 9.

**11.** A computer system for displaying a web page, said computer system comprising:
a processor (36A);
an input device (36C) connected to said processor (36A) for communicating user inputs to the processor (36A);
a screen (36B) connected to said processor (36A) for displaying the web page (10); and
web page display means associated with said processor (36A) operable to cause said processor to:
(a) display on the screen, a first representation (18) of the web page (10) in its original layout in which a collection of adjacent areas of content (10a, 10b, 10c, 10d) are rendered in a two-dimensional structure, but in a reduced size;
(b) receive from the input device (36C), a first input to zoom into a portion of interest (20) within the web page, said portion of interest being selected in the first representation (18); and
(c) display on the screen (36B), a second representation (16) of the selected portion of the web page (10) in another layout wherein the areas of content (10a, 10b, 10c, 10d) are re-rendered in a narrower structure, and in a larger size.

**12.** The computer system of claim 11 wherein the web page display means is further operable to cause said processor (36A) to replace the first representation (18) on the screen with the second representation (16) upon receipt of the first input.

**13.** The computer system of claim 12 wherein the web page display means is further operable to cause said processor (36A) to:
receive a second input from the input device (36C) to zoom out; and
in response to receiving said second input, replace the second representation (16) on the screen with the first representation (18).

**14.** The computer system of claim 11 wherein the web page display means is further operable to cause said processor (36A) to display on the screen (36B), the first and second representations (16, 18) simultaneously in first and second panels.

**15.** The computer system of any one of claims 11 to 14 further comprising:
a communication device connected to said processor to allow the processor (36A) to communicate with another computer,
wherein said web page display means is further operable to cause said processor (36A) to:
download the web page (10) from said another computer through said communication device; and
render the first representation (18) of the web page in its original layout, but in a reduced size,
both prior to step (a).

**16.** The computer system of any one of claims 11 to 14 further comprising:
a communication device connected to said processor to allow the processor (36A) to communicate with another computer,
wherein said web page display means is further operable to cause said processor to:
download from said another computer through said communication device, a rendering of the first representation (18) of the web page (10) in its original layout, but in a reduced size before step (a); and
download from said another computer through said communication device, a rendering of the second representation (16) of the selected portion of the web page in the other layout, and in a larger size between steps (b) and (c).

**17.** The computer system of any one of claims 11 to 16 wherein the other layout (16) comprises a substantially linear rendering of the areas of content (10a, 10b, 10c, 10d).

**18.** The computer system of any one of claims 11 to 17 wherein the computer system is a handheld device.

**19.** A method for a server to communicate a web page to a client, said method comprising:
rendering a first representation (18) of the web page (10) in its original layout in which a collection of adjacent areas of content (10a, 10b, 10c, 10d) are rendered in a two-dimensional structure, but in a reduced size;
transmitting said rendering of the first representation to the client;
receiving a request from the client for a rendering of a second representation (16) of a selected portion (20) of the web page in a larger size; and
in response to receiving said request, rendering the second representation (16) of the selected portion of the web page (10) in another layout wherein the areas of content (10a, 10b, 10c, 10d) are re-rendered in a narrower structure, and in the larger size and transmitting said rendering of said second representation to the client.

**20.** The method of claim 19 wherein the other layout (16) comprises a substantially linear rendering of the areas of content (10a, 10b, 10c, 10d).

**21.** The method of claim 19 or 20 wherein the server is a wireless telecommunications server and the client is a wireless handheld device.

**22.** A computer-readable medium containing instructions for a server to implement the method of any one of claims 19 to 21.

**23.** A server for communicating a web page to a client, said server comprising:
means for rendering a first representation (18) of the web page (10) in its original layout in which a collection of adjacent areas of content (10a, 10b, 10c, 10d) are rendered in a two-dimensional structure, but in a reduced size;
means for transmitting said rendering of the first representation to the client;
means for receiving a request from the client for a rendering of a second representation (16) of a selected portion (20) of the web page in a larger size; and
means for rendering the second representation (16) of the selected portion of the web page (10) in another layout wherein the areas of content (10a, 10b, 10c, 10d) are re-rendered in a narrower structure, and in the larger size and transmitting said re-rendering of said second representation to the client.

**24.** The server of claim 23 wherein the other layout (16) comprises a substantially linear rendering of the areas of content (10a, 10b, 10c, 10d).
